# EUROPÄISCHE PATENTANMELDUNG

(11) **EP 1 445 525 A1**
(43) Veröffentlichungstag der Anmeldung: **11.08.2004**
(21) Anmeldenummer: 04001280.9
(22) Anmeldetag: 22.01.2004
(51) Int. Cl.: F16L 13/14, F16L 25/00, F16L 33/213

(54) **Flammlos hergestellte Anschlussvorrichtung**

(30) Priorität: 08.02.2003 DE 20302022 U
(71) Anmelder: BRUGG Rohr AG, Holding, 5200 Brugg (CH)
(72) Erfinder: Bittner, Herbert, 31515 Wunstorf (DE)

(57) **Zusammenfassung**

Eine flammlos hergestellte Anschlußverbindung für gewellte Metallrohre (W) weist
a) eine auf das entwellte Ende (3) des Metallrohres (W) aufgeschobene Metallbuchse (2) sowie
b) ein mit seinem einen endseitigen Abschnitt (1a) in das entwellte Ende (3) des Metallrohres (W) eingeschobenes Anschlußstück (1) auf, wobei der endseitige Abschnitt (1a) in das entwellte Ende (3) des Metallrohres (W) eingewalzt ist.

## Beschreibung

Die Erfindung betrifft eine flammlose Anschlußverbindung für gewellte Metallrohre.

Für den Anschluß von gewellten Metallrohre an Glattrohre, Rohrflansche etc. sind verschiedene Techniken entwickelt worden.

So ist es beispielsweise bekannt, das Wellrohrende zu entwellen, so daß für den Anschluß ein glattes Rohrende vorliegt, welches z. B. mit einem Rohrflansch verschweißt werden kann.

Eine andere Lösung sieht vor, auf das Ende eines schraubenlinienförmig gewellten Metallrohres eine mit einem schraubenlinienförmigen Gewindegang versehene Buchse aufzuschrauben. Die Buchse kann mit dem Wellrohrende verlötet oder verschweißt werden, oder aber eine Abdichtung wird mit Hilfe von Dichtungswerkstoffen wie z. B. Graphit erreicht.

Die Probleme, die beim Anschluß eines sch raubenlinienförmig gewellten Metallrohrs anstehen, bestehen darin, daß die Schnittkante des Wellrohrendes stets exzentrisch zur Mittelachse gelegen ist und auf der einen Seite durch einen Wellenberg, auf der gegenüberliegenden Seite durch ein Wellental und zwischen diese beiden Punkten durch die Wellenflanken verläuft. Darüberhinaus ist die Wanddicke bei gewellten Rohren in der Regel sehr dünn so daß eine Verschweißung vielfach problematisch ist. Darüberhinaus ist das Schweißen in explosionsgefährdeten Bereichen nicht zulässig.

Aus der DE 33 02 450 C2 ist eine Verbindung zwischen dem Ende eines schraubenlinienförmig gewellten Metallrohres und einem Glattrohrstutzen bekannt, bei welcher auf das Wellrohrende eine Außenbuchse und der Glattrohrstutzen mittels eines an seiner Außenfläche vorgesehenen Gewindes in das Wellrohrende eingeschraubt ist, wobei der Glattrohrstutzen aus dem Wellrohr herausragt.

Die Abdichtung zwischen Glattrohrstutzen und dem Wellrohr wird dadurch erreicht, daß die lichte Weite der Außenbuchse zum Ende hin zunimmt und/oder der Durchmesser des Außengewindes zum Ende des Rohrstutzens hin abnimmt. Infolge der Konizitäten wird eine Abdichtung erreicht, die den normalen Anforderungen genügt. Für extreme Anforderung kann zwischen dem Gewinde des Rohrstutzens und dem Wellrohr ein Dichtungsmittel z. B. Hanf vorgesehen werden. Diese Anschlußverbindung hat sich bewährt, da sie an den Rohrverleger keine großen Anforderungen stellt, da die Handgriffe denen bei der Montage von Glattrohren im wesentlichen gleichen.

Nachteilig bei dieser Anschlußverbindung sind die hohen Kosten, die bei der Herstellung des Glattrohrstutzens sowie der Außenbuchse entstehen.

Der vorliegenden Erfindung liegt von daher die Aufgabe zugrunde, eine Anschlußverbindung anzugeben, die ohne Löten oder Schweißen auf der Montagestelle auskommt und die mit wesentlich einfacheren Mitteln eine mechanisch feste und dichte Verbindung zwischen einem gewellten Metallrohr und einem Anschlußstück herstellt.

Diese Aufgabe wird durch die im Anspruch 1 erfaßten Merkmale gelöst.

Der wesentliche Vorteil der Erfindung ist darin zu sehen, daß mit einfachen Mitteln eine sog. flammlose Verbindung zwischen einem gewellten Rohr und einem Anschlußstück herstellbar ist. Die beim Schweißen von nichtrostendem Stahl auftretenden Anlauffarben, die zu Korrosionsschäden führen können, werden vermieden.

Weitere vorteilhafte Ausgestaltungen der Erfindung sind in den Unteransprüchen erfaßt.

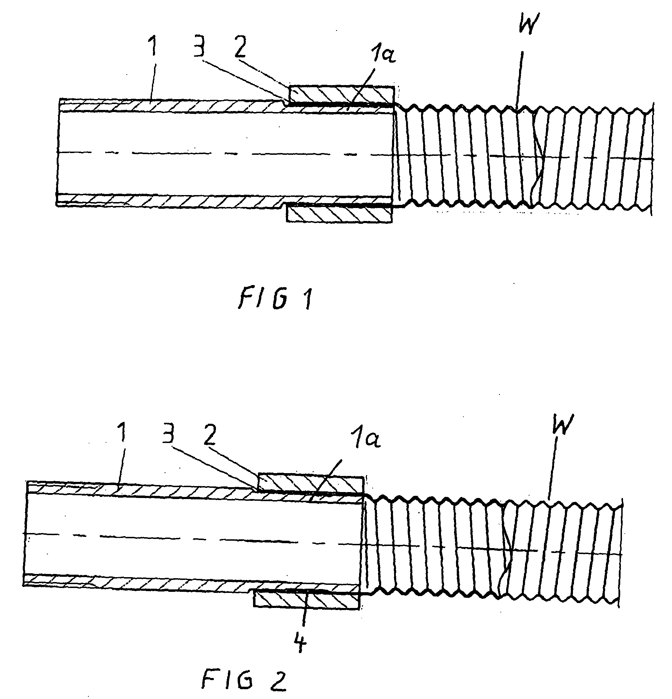

Die Erfindung ist anhand der in den Figuren 1 und 2 schematisch dargestellten Ausführungsbeispiele näher erläutert.

In den Figuren ist mit W ein schraubenlinienförmiges Metallrohr bezeichnet, welches aus einem Band aus rostfreiem Stahl durch Längsformen des Bandes zu einem Rohr mit Längsschlitz, Verschweißen des Längsschlitzes und anschließendes Wellen des Rohres hergestellt wurde.

Zur Vorbereitung einer Anschlußverbindung wird zunächst das Ende 3 des Wellrohres W entwellt, beispielsweise durch geeignete nicht dargestellte Werkzeuge. Sodann wird auf das Ende 3 eine Metallbuchse 2 aufgesteckt. Der Innendurchmesser der Metallbuchse 2 entspricht annähernd dem Außendurchmesser des Endes 3, so daß die Metallbuchse 2 mit leichtem Schiebesitz auf dem Ende 3 sitzt.

Sodann wird das Anschlußstück 1 in das entwellte Ende 3 eingeschoben. Das Anschlußstück 1 weist an seinem dem Wellrohr W zugekehrten Ende einen im Durchmesser reduzierten Abschnitt 1a auf, dessen Außendurchmesser dem Innendurchmesser des Endes 3 annähernd entspricht, so daß der Abschnitt 1a ebenfalls mit leichtem Schiebesitz in das Ende 3 eingeschoben werden kann. Die Metallbuchse 2 sowie das Anschlußstück 1 bestehen vorzugsweise aus rostfreiem Stahl. Das Anschlußstück 1 kann an seinem dem Abschnitt 1a entgegengesetzten Ende ein nicht näher bezeichnetes Gewinde aufweisen.

Die innere Oberfläche der Metallbuchse 2 sowie die äußere Oberfläche des Abschnitts 1a weisen vorteilhafterweise eine Mittenrauigkeit R_{z} von 10 bis 65 µm, wodurch sich Dichtigkeit und Haftung verbessern.

Abschließend wird der Abschnitt 1a mittels eines geeigneten nicht dargestellten Werkzeuges mit hohem Druck gegen die Innenwandung des Endes 3 geformt, wobei sich eine metallische Verbindung ergibt. Die Verformung erfolgt vorteilhafterweise durch ein Walzwerkzeug. Bei der radial nach außen gerichteten Verformung dient die Metallbuchse 2 als Gegenlager, d. h. die Metallbuchse 2 dient als Stützring.

In der Figur 2 ist in den Abschnitt 1a eine ringförmige Nut eingeformt, in welcher eine Dichtung 4 vorzugsweise aus Graphit eingelegt ist.

Bei einem bevorzugten Ausführungsbeispiel hat das Wellrohr einen Innendurchmesser (lichte Weite) von 21 mm und einen Außendurchmesser von 25 mm. Die Wanddicke beträgt 0,3 mm. Das entwellte Ende 3 hat eine Länge von 25 mm. Sein Außendurchmesser entspricht dem Außendurchmesser des Wellrohres W, also 25 mm. Die Metallbuchse 3 hat eine Länge von 25 mm und eine Wanddicke von 4 mm.

Der Abschnitt 1a des Anschlußstücks weist eine Länge von 26 mm auf. Der Außendurchmesser des Abschnitts 1a beträgt 25 mm und der Innendurchmesser 20,9.

Sowohl die Variante nach Figur 1 als auch die Variante nach Figur 2 bestanden einen Dichtigkeitstest über 200 Tage. Die Zugbelastung beträgt mehr als 20 kg.

Ein mit einer erfindungsgemäßen Anschlußverbindung ausgerüstetes Wellrohr findet bevorzugt Anwendung als Wärmetauscherrohr, wobei alle Bauteile vorzugsweise aus nichtrostendem Stahl bestehen.

## Patentansprüche

1. Flammlose Anschlußverbindung für gewellte Metallrohre (W) welche aufweist
a) eine auf das entwellte Ende (3) des Metallrohres (W) aufgeschobene Metallbuchse (2) sowie
b) ein mit seinem einen endseitigen Abschnitt in das entwellte Ende (3) des Metallrohres (W) eingeschobenes Anschlußstück (1), wobei der endseitige Abschnitt (1a) in das entwellte Ende (1a) des Metallrohres (W) eingewalzt ist.

2. Flammlose Anschlußverbindung nach Anspruch 1, **dadurch gekennzeichnet, daß** die Differenz zwischen dem Innendurchmesser der Metallbuchse (2) und dem Außendurchmesser des entwellten Endes (3) des Metallrohres (W) zwischen 0,1 und 1 mm beträgt.

3. Flammlose Anschlußverbindung nach Anspruch 1 oder 2, **dadurch gekennzeichnet, daß** die Mittenrauigkeit R_{z} der inneren Oberfläche der Metallbuchse (2) sowie die äußere Oberfläche des Abschnitts (1a) 2,5 - 250 µm, vorzugsweise 10 - 63 µm beträgt.

4. Flammlose Anschlußverbindung nach einem der Ansprüche 1 bis 3, **dadurch gekennzeichnet, daß** die Differenz zwischen dem Innendurchmesser des entwellten Endes (3) des Metallrohres (W) und dem Außendurchmesser des endseitigen Abschnitts (1a) zwischen 0,5 und 1 mm liegt.

5. Flammlose Anschlußverbindung nach einem der Ansprüche 1 bis 4, **dadurch gekennzeichnet, daß** in die äußere Oberfläche des endseitigen Abschnitts (1a) eine umlaufende Nut (4) eingebracht ist, in welcher sich ein Dichtmaterial befindet.

6. Flammlose Anschlußverbindung nach Anspruch 5, **dadurch gekennzeichnet, daß** das Dichtmaterial Graphit ist.

7. Flammlose Anschlußverbindung nach einem der Ansprüche 1 bis 6 für ein gewelltes Metallrohr aus rostfreiem Stahl, **dadurch gekennzeichnet, daß** die Metallbuchse (2) und das Anschlußstück (1) aus rostfreiem Stahl bestehen.
